# EUROPEAN PATENT APPLICATION

(11) **EP 4 797 351 A1**
(43) Date of publication of application: **26.08.2026**
(21) Application number: 24897996.5
(22) Date of filing: 19.11.2024
(51) Int. Cl.: H01M 4/36, H01M 4/525, H01M 4/505, H01M 4/131, H01M 10/052, H01M 4/02

(54) **CATHODE ACTIVE MATERIAL, AND CATHODE AND LITHIUM SECONDARY BATTERY COMPRISING SAME**

(30) Priority: 01.12.2023 KR 20230172675
(71) Applicant: LG Chem, Ltd., Seoul 07336 (KR)
(72) Inventor: RYU, Hyeon Mo, Daejeon 34122 (KR); JEONG, Jin Hoo, Daejeon 34122 (KR); JEONG, Myung Gi, Daejeon 34122 (KR); HWANG, Joo Kyoung, Daejeon 34122 (KR); GU, Ye Hyeon, Daejeon 34122 (KR); LEE, Ji Young, Daejeon 34122 (KR); HEO, Kook Jin, Daejeon 34122 (KR); KIM, Kyung Gu, Daejeon 34122 (KR)
(74) Representative: Hoffmann Eitle
(86) International application number: PCT/KR2024/018293
(87) International publication number: WO 2025/116400

(57) **Abstract**

The present invention relates to a cathode active material in a single particle form, the cathode active material comprising: a lithium composite transition metal oxide in a single particle form that has a layered structure; and a coating part containing cobalt formed on the lithium composite transition metal oxide in a single particle form, wherein the cathode active material satisfies expression 1 or expression 2 described in the present specification. Furthermore, the present invention relates to a cathode and a lithium secondary battery comprising the cathode active material.

## Description

### [Technical Field]

### CROSS-REFERENCE TO RELATED APPLICATION

The present application claims priority to Korean Patent Application No. 10-2023-0172675, filed on December 1, 2023, the entire content of which is incorporated herein for all purposes by reference.

### Technical Field

The present invention relates to a positive electrode active material comprising a lithium composite transition metal oxide in the form of a single particle, and a positive electrode and a lithium secondary battery including the same.

### [Background Art]

Recently, as technology development and demand for mobile devices and electric vehicles increase, demand for secondary batteries as an energy source is rapidly increasing. Among the secondary batteries, a lithium secondary battery, which has high energy density and voltage, long cycle life and low self-discharge rate, has been commercialized and is widely used.

As positive electrode active materials for the lithium secondary batteries, lithium transition metal oxides such as lithium cobalt oxide such as LiCoO₂, lithium nickel oxide such as LiNiO₂, lithium manganese oxide such as LiMnO₂ or LiMn₂O₄, and lithium iron phosphate oxide such as LiFePO₄ have been developed, and recently, lithium composite transition metal oxides containing two or more transition metals such as Li[NiₐCo_{b}Mn_{c}]O₂, Li[NiₐCo_{b}Al_{c}]O₂, and Li[NiₐCo_{b}Mn_{c}Al_{d}]O₂ have been developed and are widely used.

Lithium composite transition metal oxides containing two or more transition metals developed to date are usually manufactured in the form of a spherical secondary particle in which tens to hundreds of primary particles are aggregated. However, recently, in order to solve the structural and thermal stability problems of the secondary particle-type positive electrode active material itself, the development of a single particle-type positive electrode active material is being accelerated. Specifically, when a positive electrode active material in the form of a secondary particle is applied to a lithium secondary battery, there is a problem that a large amount of gas is generated, causing the volume of the battery to expand. When the content of nickel in the positive electrode active material is increased for high capacity, there is also a problem that the risk of fire increases. Accordingly, the demand for the development of a positive electrode active material in the form of a single particle with excellent stability is increasing. However, a positive electrode material in the form of a single particle has a problem in that the resistance characteristics are poor due to the low specific surface area.

Therefore, there is a need for the development of a positive electrode material in the form of a single particle that is excellent in stability and can improve the initial efficiency, resistance characteristics, etc. of a battery when applied to the battery.

### [Disclosure]

### [Technical Problem]

The present invention is intended to solve the above problems, and aims to provide a positive electrode active material that has excellent structural stability and can improve the initial efficiency, resistance characteristics, etc. of a battery when applied to the battery.

In addition, the present invention aims to provide a lithium secondary battery that includes the positive electrode active material and thus has improved initial efficiency, resistance characteristics, etc.

### [Technical Solution]

In order to solve the above problems, the present invention provides a positive electrode active material, a positive electrode, and a lithium secondary battery.
(1) The present invention provides a positive electrode active material comprising: a lithium composite transition metal oxide in the form of a single particle having a layered structure; and a coating part including cobalt formed on the lithium composite transition metal oxide, wherein the positive electrode active material satisfies Equation 1 or Equation 2 below:

   $0 \leq \left[-log\left({I}_{normalized , 2 θ = 37 ° ∼ 38 °}\right)-2\right] \times 100 \leq 15$

   $1 < \left[-log\left({I}_{normalized , 2 θ = 45 ° ∼ 45.5 °}\right)-2\right] \times 100 \leq 10$
   wherein I_{normalized,2θ=37°~38°} is a ratio of a peak intensity corresponding to a LiCoO₂ Cu Kα1 diffraction peak position existing at 37° to 38° to a peak intensity of a (003) plane in an XRD spectrum of the positive electrode active ₘₐₜₑᵣᵢₐₗ, and I_{normalized,2θ=45°~45.5°} is a ratio of a peak intensity corresponding to a LiCoO₂ Cu Kα1 diffraction peak position existing at 45° to 45.5° to the peak intensity of the (003) plane in the XRD spectrum of the positive electrode active material.
(2) The present invention provides the positive electrode active material according to (1) above, wherein the lithium composite transition metal oxide has an average particle diameter (D₅₀) of 1.0 µm to 5.0 µm.
(3) The present invention provides the positive electrode active material according to (1) or (2) above, wherein the lithium composite transition metal oxide includes nickel (Ni), cobalt (Co), and manganese (Mn).
(4) The present invention provides the positive electrode active material according to any one of (1) to (3) above, wherein the lithium composite transition metal oxide has a composition represented by Chemical Formula 1 below:

   [Chemical Formula 1] LiₐNi_{b}Co_{c}Mn_{d}M¹ₑO₂

   wherein:
   M¹ is at least one selected from Al, Zr, B, W, Mo, Cr, Nb, Mg, Hf, Ta, La, Ti, Sr, Ba, Ce, Sn, Y, Zn, F, P, and S, and
   0.9≤a≤1.1, 0.8≤b<1.0, 0<c<0.2, 0<d<0.2, 0≤e≤0.1, and b+c+d+e=1.
(5) The present invention provides the positive electrode active material according to any one of (1) to (4) above, wherein the coating part includes a thin film shape, a discontinuously formed island shape, or a combination thereof.
(6) The present invention provides the positive electrode active material according to any one of (1) to (5) above, wherein the coating part is a region ranging from a surface of the positive electrode active material to 5 nm to 100 nm in the center direction.
(7) The present invention provides a positive electrode comprising the positive electrode active material according to any one of (1) to (6) above.
(8) The present invention provides a lithium secondary battery comprising: the positive electrode according to (7) above; a negative electrode; and a separator interposed between the positive electrode and the negative electrode; and an electrolyte.

### [Advantageous Effects]

The positive electrode active material of the present invention comprises a lithium composite transition metal oxide in the form of a single particle; and a coating part including cobalt formed on the lithium composite transition metal oxide in the form of a single particle, and satisfies Equation 1 or Equation 2 described herein, thereby improving the initial efficiency, resistance characteristics, capacity characteristics, lifespan characteristics, etc. of a lithium secondary battery.

### [Description of Drawings]

FIG. 1 is an XRD spectrum of positive electrode active materials of Examples 1 to 3 and Comparative Examples 1 and 2.
FIG. 2 is an SEM image of a calcined product of a preparation example.
FIG. 3 is an SEM image of a positive electrode active material of Example 1.
FIG. 4 is an SEM image of a positive electrode active material of Example 2.
FIG. 5 is an SEM image of a positive electrode active material of Example 3.
FIG. 6 is an SEM image of a positive electrode active material of Comparative Example 1.
FIG. 7 is an SEM image of a positive electrode active material of Comparative Example 3.
FIG. 8 is an SEM image of a positive electrode active material of Comparative Example 4.
FIG. 9 shows HAADF-STEM (High Angle Annular Dark Field - Scanning Transmission Electron Microscopy) element mapping data of a cross-sectional sample of a positive electrode active material of Example 2.

### [Best Modes of the Invention]

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as 'comprise', 'include', and "have" as used herein are intended to designate the presence of implemented features, numbers, steps, components, or combinations thereof, but not to preclude a possibility of existence or addition of one or more other features, numbers, steps, components, or combinations thereof.

In this specification, the term 'on~' is meant to include not only a case where a component is formed directly on another component, but also a case where a third component is interposed between these components.

In this specification, a 'positive electrode active material in the form of a single particle' is a concept that is in contrast to a positive electrode active material in the form of a spherical secondary particle formed by agglomeration of tens to hundreds of primary particles manufactured by a conventional method, and refers to a positive electrode active material composed of 10 or less primary particles. Specifically, the positive electrode active material in the form of a single particle in the present invention may be a single particle composed of one primary particle, or may be in the form of a secondary particle in which several primary particles are aggregated.

A 'primary particle' refers to a minimum particle unit recognized when observing a positive electrode active material through a scanning electron microscope, and a 'secondary particle' refers to a secondary structure formed by agglomeration of a plurality of primary particles.

In this specification, the term 'average particle diameter (D₅₀)' means a particle diameter at 50% point of a cumulative volume distribution according to the particle diameter. The average particle diameter (D₅₀) can be measured by dispersing the powder to be measured in a dispersion medium and then introducing it into a commercially available laser diffraction particle size measuring device (e.g., S3500 of Microtrac), measuring a difference in diffraction patterns according to the particle size when the particles pass through the laser beam to obtain a particle size distribution, and calculating a particle diameter at a point that is 50% of the cumulative volume distribution according to the particle size in the measuring device. Specifically, in this specification, D₅₀ is a value measured after setting Particle Characteristics Parameter of Microtrac's S3500 to Refractive index: 1.55, Transparency: Transparent, Shape: Irregular, and then adding the powder to be measured and 500 uL of a 10 wt% sodium hexa-metaphosphate aqueous solution to 25 ml of distilled water at 20% flow and performing sonication for 1 minute.

In this specification, I_{normalized,2θ} means a peak intensity at a specific 2θ when the XRD spectrum of the positive electrode active material is normalized by setting the peak intensity of the (003) plane to 1. That is, I_{normalized,2θ} means a ratio of the peak intensity at a specific 2θ to the peak intensity of the (003) plane in the XRD spectrum of the positive electrode active material.

### Positive Electrode Active Material

The present invention provides a positive electrode active material comprising: a lithium composite transition metal oxide in the form of a single particle having a layered structure; and a coating part including cobalt formed on the lithium composite transition metal oxide, wherein the positive electrode active material satisfies Equation 1 or Equation 2 below:

$0 \leq \left[-log\left({I}_{normalized , 2 θ = 37 ° ∼ 38 °}\right)-2\right] \times 100 \leq 15$
$1 < \left[-log\left({I}_{normalized , 2 θ = 45 ° ∼ 45.5 °}\right)-2\right] \times 100 \leq 10$
wherein:
I_{normalized,2θ=37°~38°} is a ratio of a peak intensity corresponding to a LiCoO₂ Cu Kα1 diffraction peak position existing at 37° to 38° to a peak intensity of the (003) plane in the XRD spectrum of the positive electrode active material, and
I_{normalized,2θ=45°~45.5°} is a ratio of a peak intensity corresponding to a LiCoO₂ Cu Kα1 diffraction peak position existing at 45° to 45.5° to a peak intensity of the (003) plane in the XRD spectrum of the positive electrode active material.

Here, the peak intensity corresponding to the LiCoO₂ Cu Kα1 diffraction peak position in the XRD spectrum of a specific positive electrode active material is an XRD peak intensity corresponding to a 2θ value corresponding to the position of the Cu Kα1 diffraction peak appearing in an XRD spectrum graph of LiCoO₂.

The present inventors have found that when the positive electrode active material comprises a lithium composite transition metal oxide in the form of a single particle; and a coating part including cobalt formed on the lithium composite transition metal oxide in the form of a single particle, and satisfies Equation 1 or Equation 2 above, surface deterioration that may occur due to a high calcination temperature during the production of the positive electrode active material in the form of a single particle is reduced, and the residual lithium content is low, so that the initial efficiency, resistance characteristics, capacity characteristics, lifespan characteristics, etc. of a lithium secondary battery can be improved, thereby completing the present invention.

When the positive electrode active material comprises the coating part, the amount of residual lithium byproducts can be reduced, and the structural stability can be increased, so that the lifespan characteristics and resistance characteristics of the battery can be improved, and the amount of gas generated can also be reduced. Here, the coating part may have a thin film form or a discontinuously formed island form, and may be formed entirely or locally on the lithium composite transition metal oxide.

Meanwhile, when the positive electrode active material according to the present invention does not satisfy Equation 1 or 2 above, there is a problem that the problem of the deteriorated layer and residual lithium existing on the surface of the positive electrode active material in the form of a single particle cannot be improved.

Specifically, when the value according to Equation 1 ([-log(*I*_{*normalized*,2*θ*=37°~38°}) - 2] × 100) is less than 0 and when the value according to Equation 2 ([-log(*I*_{*normalized*,2*θ*=45°~45.5°}) - 2] × 100) is 1 or less, there is a problem that the cobalt coating layer does not exist and thus the deteriorated portion on the surface of the positive electrode active material in the form of a single particle still exists. In addition, when the value according to Equation 1 is more than 15 and when the value according to Equation 2 is more than 10, cobalt is diffused and exists inside the positive electrode active material in the form of a single particle, so that even in this case, there is a problem that the cobalt coating layer hardly exists on the surface of the positive electrode active material, and thus the deteriorated portion on the surface of the positive electrode active material still exists.

The values according to Equations 1 and 2 above are determined by a complex interaction of the presence or absence of a coating part containing cobalt, the manufacturing method of the positive electrode active material, for example, the amount of cobalt-containing coating material added during the manufacturing of the positive electrode active material, the heat treatment temperature, etc., and are not determined by a single factor alone.

According to the present invention, the lithium composite transition metal oxide may have an average particle diameter (D₅₀) of 1.0 µm to 5.0 µm, specifically, 1.0 µm or more, 1.5 µm or more, 2.0 µm or more, 2.5 µm or more, or 3.0 µm or more, and 4.5 µm or less, or 5.0 µm or less. When the average particle diameter (D₅₀) of the lithium composite transition metal oxide is within the above range, the amount of gas generated during charge/discharge behavior can be minimized and high capacity can be realized.

According to the present invention, the lithium composite transition metal oxide may include nickel (Ni), cobalt (Co), and manganese (Mn).

The lithium composite transition metal oxide may include nickel in an amount of 60 mol% or more, specifically, 80 mol% or more, and more specifically, 85 mol% or more, based on the total number of moles of metals excluding lithium. That is, the lithium composite transition metal oxide may be a high-nickel lithium composite transition metal oxide. In this case, the energy density of a lithium secondary battery can be improved.

According to the present invention, the lithium composite transition metal oxide may have a composition represented by Chemical Formula 1 below: In this case, the lithium composite transition metal oxide has a layered structure.

[Chemical Formula 1] LiₐNi_{b}Co_{c}Mn_{d}M¹ₑO₂

wherein:
M¹ is at least one selected from Al, Zr, B, W, Mo, Cr, Nb, Mg, Hf, Ta, La, Ti, Sr, Ba, Ce, Sn, Y, Zn, F, P, and S, and
0.9≤a≤1.1, 0.8≤b<1.0, 0<c<0.2, 0<d<0.2, 0≤e≤0.1, and b+c+d+e=1.

The b refers to the atomic fraction of nickel among the metal elements in the lithium composite transition metal oxide, and may be 0.80 or more, 0.81 or more, 0.82 or more, 0.83 or more, 0.84 or more, 0.85 or more, 0.86 or more, 0.87 or more, 0.88 or more, 0.89 or more, or 0.90 or more, and may be 0.95 or less, 0.96 or less, 0.97 or less, 0.98 or less, 0.99 or less, or less than 1.0.

The c refers to the atomic fraction of cobalt among the metal elements in the lithium composite transition metal oxide, and may be more than 0, 0.001 or more, 0.002 or more, 0.003 or more, 0.004 or more, 0.005 or more, 0.006 or more, 0.007 or more, 0.008 or more, 0.009 or more, or 0.01 or more, and may be 0.05 or less, 0.06 or less, 0.07 or less, 0.08 or less, 0.09 or less, 0.10 or less, 0.11 or less, 0.12 or less, 0.13 or less, 0.14 or less, 0.15 or less, 0.16 or less, 0.17 or less, 0.18 or less, 0.19 or less, or less than 0.20.

The d refers to the atomic fraction of manganese among the metal elements in the lithium composite transition metal oxide, and may be more than 0, 0.005 or more, 0.01 or more, 0.015 or more, or 0.02 or more, and may be 0.04 or less, 0.05 or less, 0.06 or less, 0.07 or less, 0.08 or less, 0.09 or less, 0.10 or less, 0.11 or less, 0.12 or less, 0.13 or less, 0.14 or less, 0.15 or less, 0.16 or less, 0.17 or less, 0.18 or less, 0.19 or less, or less than 0.20.

The e refers to the atomic fraction of the M¹ element among the metal elements in the lithium composite transition metal oxide, and may be 0 or more, and may be 0.007 or less, 0.008 or less, 0.009 or less, 0.01 or less, 0.05 or less, 0.1 or less.

According to the present invention, the lithium composite transition metal oxide may be doped with zirconium and yttrium. In this case, the particle shape is improved and the structure is stabilized, so that the capacity and energy density of the battery can be increased.

According to the present invention, the coating part may include a lithium cobalt-based oxide having a composition having a higher cobalt content than the lithium composite transition metal oxide. That is, the coating part may include a lithium cobalt-based oxide having the same layered structure as the lithium composite transition metal oxide and having a composition represented by LiCo₁₋ₓMₓO₂ (wherein M is Ni, Co, Mn, Al, or a combination thereof, and x is 0 or more and less than 1.0).

According to the present invention, the coating part may include a thin film shape, a discontinuously formed island shape, or a combination thereof. Meanwhile, when the coating part is a thin film, the film may have a wrinkled form. In this case, a coating part including appropriate cobalt is formed on the surface of the positive electrode active material, so that the surface deterioration layer is improved, and thus the capacity, initial efficiency, and resistance of the battery can be further improved.

According to the present invention, the coating part may be a region ranging from the surface of the positive electrode active material to 5 nm to 100 nm in the center direction. That is, the coating part may be a region ranging from the surface to a specific point in the range of 5 nm to 100 nm in the center direction of the positive electrode active material. In this case, a coating part including appropriate cobalt is formed on the surface of the positive electrode active material, so that the surface deterioration layer is improved, and thus the capacity, initial efficiency, and resistance of the battery can be further improved.

Meanwhile, the cobalt present in the coating part may be included in an amount of 0.5 mol% to 3 mol% based on the total number of moles of metals excluding lithium included in the lithium composite transition metal oxide. In this case, residual lithium byproducts can be further reduced, and lifespan and resistance characteristics can be further improved.

The positive electrode active material according to the present invention may be manufactured by a method for manufacturing a positive electrode active material, including the steps of: (A) mixing a positive electrode active material precursor, which is a composite transition metal hydroxide, a composite transition metal oxyhydroxide, or a combination thereof, and a lithium-containing raw material to prepare a mixture; (B) calcining the mixture to prepare a calcined product; and (C) mixing the calcined product and a cobalt-containing coating material, and then performing a heat treatment.

The lithium-containing raw material may be lithium-containing sulfate, nitrate, acetate, carbonate, oxalate, citrate, halide, hydroxide, or oxyhydroxide, but is not particularly limited as long as it is soluble in water. Specifically, the lithium-containing raw material may be Li₂CO₃, LiNO₃, LiNO₂, LiOH, LiOH · H₂O, LiH, LiF, LiCl, LiBr, LiI, CH₃COOLi, Li₂O, Li₂SO₄, CH₃COOLi, or Li₃C₆H₅O₇, and any one or a mixture of two or more thereof may be used.

The composite transition metal hydroxide, composite transition metal oxyhydroxide or combination thereof and the lithium-containing raw material may be mixed so that the ratio (Li/M) of the number of moles of lithium (Li) included in the lithium-containing raw material to the total number of moles of transition metals (M) included in the composite transition metal hydroxide, composite transition metal oxyhydroxide or combination thereof is 1.0 or more, 1.01 or more, or 1.02 or more, and 1.05 or less, 1.06 or less, 1.07 or less, 1.08 or less, 1.09 or less, or 1.10 or less.

When preparing the mixture in the step (A), a doping element-containing raw material, for example, a zirconium-containing raw material, an yttrium-containing raw material, etc., may be further mixed.

The step (B) may be a step of preparing a calcined product by successively performing a first calcination at 800°C to 900°C and a second calcination at 700°C to 800°C under an atmospheric atmosphere for the mixture. In this case, the second calcination may be performed at a temperature lower than that of the first calcination.

The cobalt-containing coating material may be Co(OH)₂, and may be mixed in an appropriate amount capable of reacting with residual lithium present in the calcined product, for example, in an amount corresponding to 2 mol% to 5 mol%, specifically 2 mol% to 3 mol%, based on the total number of moles of the calcined product.

The heat treatment may be performed at 650°C to 800°C, specifically 670°C to 770°C, so that cobalt can sufficiently react only on the surface. Meanwhile, the heat treatment may include a first heat treatment at 650°C to 800°C, specifically 670°C to 770°C, followed by a second heat treatment (similar to an annealing process) at 450°C to 550°C to remove defects on the surface of the positive electrode active material.

### Positive Electrode

The present invention provides a positive electrode including the positive electrode active material.

The positive electrode may include a positive electrode current collector and a positive electrode active material layer formed on the positive electrode current collector, wherein the positive electrode active material layer may include the positive electrode active material.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 µm to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity characteristics within this range.

The conductive material is used to impart conductivity to the electrode, and may be any material without particular limitation as long as it has electronic conductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as zinc oxide and potassium titanate; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer, which may be applied on a positive electrode current collector, and then dried and rolled to manufacture the positive electrode. Alternatively, the positive electrode may be manufactured by casting a composition for forming a positive electrode active material layer on a separate support, peeling off the support to obtain a film, and laminating the film on a positive electrode current collector.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

### Lithium Secondary Battery

The present invention provides a lithium secondary battery comprising: the positive electrode; a negative electrode; and a separator and an electrolyte interposed between the positive electrode and the negative electrode.

The lithium secondary battery may optionally further include a battery container for accommodating an electrode assembly formed of the positive electrode, negative electrode, and separator, and a sealing member for sealing the battery container.

The negative electrode may include a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 µm to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer may optionally include a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

The binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector.

The separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention has excellent initial efficiency, resistance characteristics, capacity characteristics, and lifespan characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

### [Modes for Carrying Out the Invention]

Hereinafter, examples of the present invention will be described in detail so that those skilled in the art can easily implement the present invention. However, the present invention may be embodied in a variety of forms and is not limited to the examples described herein.

### Preparation Example

A composite transition metal hydroxide in the form of a secondary particle formed by aggregating tens to hundreds of primary particles (composition: Ni_{0.96}Co_{0.01}Mn_{0.03}(OH)₂, average particle diameter (D₅₀): 4 µm) and Al(OH)₃ were mixed in a molar ratio of 1:0.003, and LiOH·H₂O was mixed so that the ratio ((Ni+Co+Mn):Li) of the total number of moles of transition metals included in the composite transition metal hydroxide (Ni+Co+Mn) and the mole number of lithium included in LiOH (Li) was 1:1.025. Then, ZrO₂ was additionally mixed in an amount such that Zr was 1500 ppm relative to the total weight of the composite transition metal hydroxide, and Y₂O₃ was additionally mixed in an amount such that Y was 300 ppm relative to the total weight of the composite transition metal hydroxide, to prepare a mixture. The mixture was heated from room temperature to 835°C at a rate of 5°C/min, and first calcined for 6 hours while being maintained at a temperature of 835°C, and then lowered to 770°C, and second calcined for 12.5 hours while being maintained at a temperature of 770°C to prepare a calcined product. The calcined product was subjected to non-exothermic pulverization using an Air Jet Mill so that the average particle diameter (D₅₀) became 3.6 µm, thereby obtaining a lithium composite transition metal oxide having a layered structure and being in the form of a single particle (composition: Li_{1.025}Ni_{0.9550}Co_{0.0099}Mn_{0.0298}Al_{0.0034}Zr_{0.0015}Y_{0.0003}O₂).

### Examples and Comparative Examples

### Example 1

The lithium composite transition metal oxide and Co(OH)₂ prepared in the preparation example were mixed in a molar ratio of 1:0.03, and Al(OH)₃ was mixed so that Al was 500 ppm based on the total weight of the lithium composite transition metal oxide, thereby preparing a mixture. Under an oxygen atmosphere, the mixture was heated from room temperature to 675°C at a rate of 5°C/min, and first heat-treated for 5 hours while being maintained at a temperature of 675°C, and then lowered to 500°C, and second heat-treated for 3 hours while being maintained at a temperature of 500°C, thereby preparing a positive electrode active material (composition: Li_{1.0004}Ni_{0.9341}Co_{0.0298}Mn_{0.0292}Al_{0.0051}Zr_{0.0015}Y_{0.0003}O₂, average particle diameter (D₅₀): 3.8 µm) in which a coating part including cobalt and aluminum was formed on the lithium composite transition metal oxide.

### Example 2

The lithium composite transition metal oxide and Co(OH)₂ prepared in the preparation example were mixed in a molar ratio of 1:0.03, and Al(OH)₃ was mixed so that Al was 500 ppm based on the total weight of the lithium composite transition metal oxide, thereby preparing a mixture. Under an oxygen atmosphere, the mixture was heated from room temperature to 715°C at a rate of 5°C/min, and first heat-treated for 5 hours while being maintained at a temperature of 715°C, and then lowered to 500°C, and second heat-treated for 3 hours while being maintained at a temperature of 500°C, thereby preparing a positive electrode active material (composition: Li_{1.0004}Ni_{0.9341}Co_{0.0298}Mn_{0.0292}Al_{0.0051}Zr_{0.0015}Y_{0.0003}O₂, average particle diameter (D₅₀): 3.8 µm) in which a coating part including cobalt and aluminum was formed on the lithium composite transition metal oxide.

### Example 3

The lithium composite transition metal oxide and Co(OH)₂ prepared in the preparation example were mixed in a molar ratio of 1:0.03, and Al(OH)₃ was mixed so that Al was 500 ppm based on the total weight of the lithium composite transition metal oxide, thereby preparing a mixture. Under an oxygen atmosphere, the mixture was heated from room temperature to 765°C at a rate of 5°C/min, and first heat-treated for 5 hours while being maintained at a temperature of 765°C, and then lowered to 500°C, and second heat-treated for 3 hours while being maintained at a temperature of 500°C, thereby preparing a positive electrode active material (composition: Li_{1.0004}Ni_{0.9341}Co_{0.0298}Mn_{0.0292}Al_{0.0051}Zr_{0.0015}Y_{0.0003}O₂, average particle diameter (D₅₀): 3.8 µm) in which a coating part including cobalt and aluminum was formed on the lithium composite transition metal oxide.

### Comparative Example 1

Without any coating raw material, the lithium composite transition metal oxide prepared in the preparation example was heated from room temperature to 715°C at a rate of 5°C/min, and first heat-treated for 5 hours while being maintained at a temperature of 715°C, and then lowered to 500°C, and second heat-treated for 3 hours while being maintained at a temperature of 500°C, thereby preparing a positive electrode active material (composition: Li_{1.025}Ni_{0.9550}Co_{0.0099}Mn_{0.0298}Al_{0.0034}Zr_{0.0015}Y_{0.0003}O₂, average particle diameter (D₅₀): 3.8 µm).

### Comparative Example 2

The lithium composite transition metal oxide prepared in the preparation example and LiCoO₂ (Aladin, Avention) were mixed in a molar ratio of 1:0.03 to prepare a positive electrode material.

### Comparative Example 3

The lithium composite transition metal oxide and Co(OH)₂ prepared in the preparation example were mixed in a molar ratio of 1:0.03, and Al(OH)₃ was mixed so that Al was 500 ppm based on the total weight of the lithium composite transition metal oxide, thereby preparing a mixture. Under an oxygen atmosphere, the mixture was heated from room temperature to 615°C at a rate of 5°C/min, and first heat-treated for 5 hours while being maintained at a temperature of 615°C, and then lowered to 500°C, and second heat-treated for 3 hours while being maintained at a temperature of 500°C, thereby preparing a positive electrode active material (composition: Li_{1.0004}Ni_{0.9341}Co_{0.0298}Mn_{0.0292}Al_{0.0051}Zr_{0.0015}Y_{0.0003}O₂, average particle diameter (D₅₀): 3.8 µm) in which a coating part including cobalt and aluminum was formed on the lithium composite transition metal oxide.

### Comparative Example 4

The lithium composite transition metal oxide and Co(OH)₂ prepared in the preparation example were mixed in a molar ratio of 1:0.03, and Al(OH)₃ was mixed so that Al was 500 ppm based on the total weight of the lithium composite transition metal oxide, thereby preparing a mixture. Under an oxygen atmosphere, the mixture was heated from room temperature to 815°C at a rate of 5°C/min, and first heat-treated for 5 hours while being maintained at a temperature of 815°C, and then lowered to 500°C, and second heat-treated for 3 hours while being maintained at a temperature of 500°C, thereby preparing a positive electrode active material (composition: Li_{1.0004}Ni_{0.9341}Co_{0.0298}Mn_{0.0292}Al_{0.0051}Zr_{0.0015}Y_{0.0003}O₂, average particle diameter (D₅₀): 3.8 µm) in which a coating part including cobalt and aluminum was formed on the lithium composite transition metal oxide.

### Experimental Example

### Experimental Example 1: Analysis of Positive Electrode Active Material

### - XRD analysis

Using XRD (Bruker, D8 Endeavor), XRD spectra of each of the positive electrode active materials of Examples 1 to 3 and Comparative Examples 1 to 4 were obtained and analyzed. Here, the XRD measurement conditions were as follows:
- Voltage: 40 kV
- Current: 40 mA
- Power: 1600 W
- Element: Cu
- Angle: 15~50°, Increment: 0.02° (10s per step)

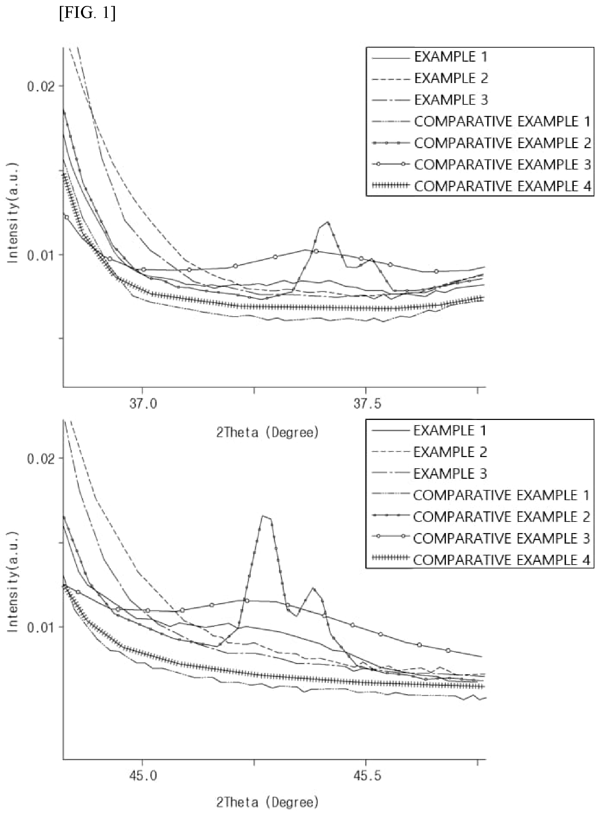

The XRD spectrum of each positive electrode active material was shown in FIG. 1, and in the XRD spectrum, the peak intensity of the (003) plane, the peak intensity corresponding to the LiCoO₂ Cu Kα1 diffraction peak position at 37° to 38°, and the peak intensity corresponding to the LiCoO₂ Cu Kα1 diffraction peak position at 45° to 45.5° were confirmed, and the values according to Equations 1 and 2 were calculated and shown in Table 1 below. Here, the peak intensity corresponding to the LiCoO₂ Cu Kα1 diffraction peak position in the XRD spectrum of a specific positive electrode active material is an XRD peak intensity corresponding to a 2θ value corresponding to the position of the Cu Kα1 diffraction peak of LiCoO₂ appearing in the XRD spectrum graph of Comparative Example 2, and specifically, an XRD peak intensity corresponding to a 2θ value corresponding to the position of the larger peak among the two peaks appearing at 37° to 38° or 45° to 45.5° in the XRD spectrum graph of Comparative Example 2 in FIG. 1.

**[Table 1]**

| Division | Equation 1 | Equation 2 |
|---|---|---|
| Example 1 | 7.26 | 0.97 |
| Example 2 | 11.07 | 5.50 |
| Example 3 | 12.21 | 8.46 |
| Comparative Example 1 | 20.62 | 18.05 |
| Comparative Example 2 | -7.77 | -22.01 |
| Comparative Example 3 | -0.65 | -6.22 |
| Comparative Example 4 | 16.75 | 15.24 |

Referring to Table 1, it can be confirmed that the positive electrode active materials of Examples 1 to 3 satisfy Equation 1 or Equation 2 of the present invention, while the positive electrode active materials of Comparative Examples 1 to 4 deviate from the same.

### - Analysis of the morphology of the positive electrode active material and Co element

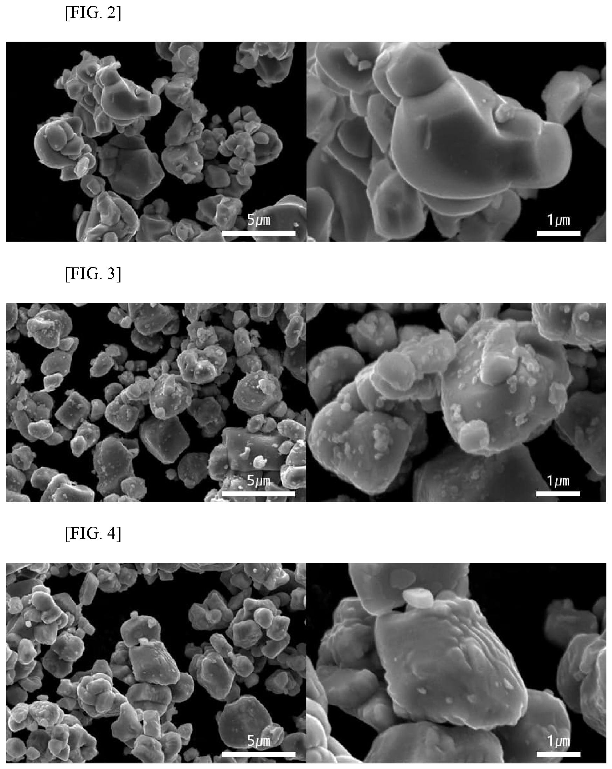

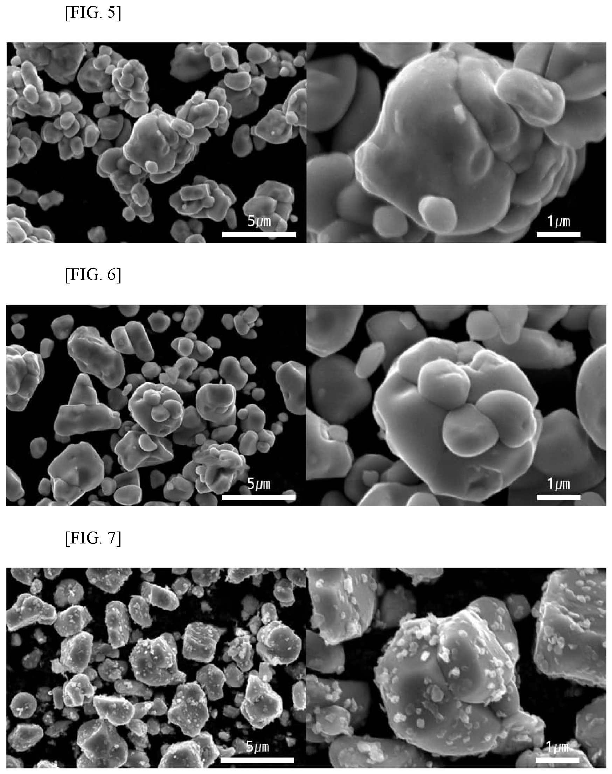

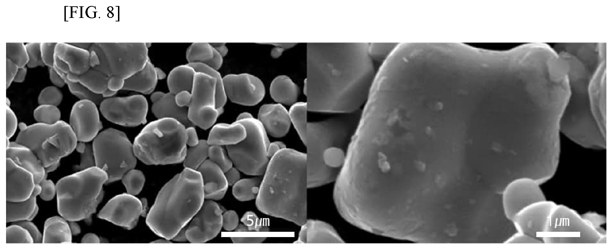

SEM images of the calcined products of the preparation examples, and the positive electrode active materials of Examples 1 to 3 and Comparative Examples 1, 3, and 4 were obtained using an electron probe microanalyzer (JEOL, JXA-iHP200F) (acceleration voltage: 15 kV, probe current: 20 nA, dwell time: 20 ms), and were shown in FIG. 2 (calcined products of the preparation examples), FIG. 3 (Example 1), FIG. 4 (Example 2), FIG. 5 (Example 3), FIG. 6 (Comparative Example 1), FIG. 7 (Comparative Example 3), and FIG. 8 (Comparative Example 4), respectively.

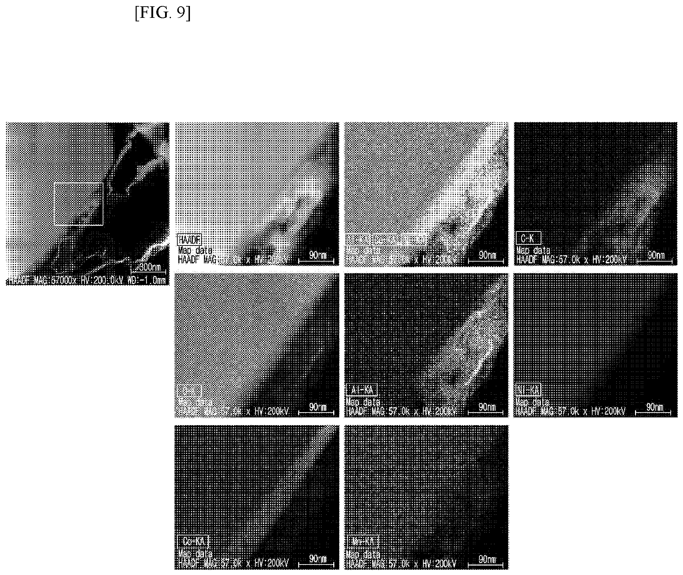

In addition, HAADF-STEM EDS (Energy-dispersive X-ray Spectroscopy) element mapping data of the cross-section sample of the positive electrode active material of Example 2 were obtained using a Titan G2 ChemiSTEM 80-200 device from Thermo Fisher Scientific, and were shown in FIG. 9. Meanwhile, the cross-section sample of the positive electrode active material was prepared by performing Ar ion milling for 2 hours using an argon ion milling system (HITACHI, IM-5000) (acceleration voltage: 6 kV).

Referring to FIGS. 2 to 6, it can be confirmed that the positive electrode active materials of Examples 1 to 3 have a coating part on the surface, whereas the positive electrode active material of Comparative Example 1 does not have a coating part on the surface.

Referring to FIG. 9, it can be confirmed that Co is coated on the surface in the form of a thin film (wrinkled film form), and Al is coated in the form of an island. In addition, it can be confirmed that the coating part is formed thinly in a region ranging from the surface of the positive electrode active material to 100 nm in the center direction.

### Experimental Example 2: Evaluation of Battery Characteristics

### (Manufacture of Half-cell)

Each of the positive electrode active materials prepared in Examples 1 and 3 and Comparative Examples 1 to 4, carbon black (Denka, DenkaBlack) as a conductive material, and PVdF (Kureha, KF1300) as a binder were added to N-methylpyrrolidone (NMP) (Daejung Chemicals & Metals) as a solvent at a weight ratio of 95:3:2 to prepare a composition for forming a positive electrode active material layer.

The composition for forming a positive electrode active material layer was applied to one surface of an aluminum foil current collector having a thickness of 20 µm, and dried at a temperature of 135°C for 3 hours to form a positive electrode active material layer. Subsequently, rolling was performed using a roll pressing method so that the porosity of the positive electrode active material layer became 20% by volume after rolling, thereby manufacturing a positive electrode.

A half-cell was manufactured using lithium metal as a negative electrode together with the above positive electrode.

### (Evaluation of initial characteristics of the battery)

The manufactured half-cells were each charged with a constant current (CC) of 0.2C at 25°C until 4.25V, charged with a constant voltage (CV) of 4.25V until the charge current became 0.005 mAh (cut-off current), left for 20 minutes, and then discharged with a constant current of 0.2C until 2.5V, and the initial charge capacity and initial discharge capacity were measured and the direct current internal resistance (DCIR) was calculated, and shown in Table 2 below. For reference, the DCIR value is a value calculated by dividing a difference between an initial voltage and a voltage at 60 seconds while discharging at a constant current of 0.2 C by the applied current.

### (Evaluation of cycle characteristics of the battery)

The manufactured half-cells were each charged at a constant current (CC) of 0.2C at 25°C until 4.25V, charged at a constant voltage (CV) of 4.25V until the charge current became 0.005 mAh (cut-off current), left for 20 minutes, and then discharged at a constant current of 0.2C until 2.5V.

Thereafter, the cells were transferred to a chamber at 45°C, charged at a constant current of 0.5C until 4.25V, charged at a constant voltage (CV) of 4.25V until the charge current became 0.005 mAh (cut-off current), and then discharged at a constant current of 1.0C until 2.5V, which was taken as one cycle, and 50 cycles of charge and discharge were performed. In this case, the percentage of the discharge capacity of the 50^{th} cycle to the discharge capacity of the first cycle was shown as the capacity retention rate in Table 2 below. In addition, the percentage of the DCIR value of the 50^{th} cycle to the DCIR value of the first cycle was shown as the resistance increase rate in Table 2 below. For reference, the DCIR value of the n^{th} cycle is a value calculated by dividing a difference between the voltage at full charge and the voltage 60 seconds after the start of discharge by the current, which are obtained while discharging to 2.5 V at a constant current of 1.0C in the n^{th} cycle.

**[Table 2]**

| | Charge capacity (mAh/g) | Discharge capacity (mAh/g) | Initial efficiency (%) | DCIR (Ω) | Capacity retention rate (%) | Resistance increase rate (%) |
|---|---|---|---|---|---|---|
| Example 1 | 243.4 | 210.3 | 86.4 | 21.1 | 95.7 | 172.7 |
| Example 2 | 242.0 | 212.6 | 87.9 | 19.9 | 96.2 | 157.4 |
| Example 3 | 242.0 | 212.1 | 87.6 | 20.9 | 95.6 | 161.7 |
| Comparative Example 1 | 245.7 | 211.0 | 85.9 | 34.3 | 94.8 | 201.5 |
| Comparative Example 2 | 240.3 | 206.6 | 86.0 | 27.4 | 94.9 | 196.1 |
| Comparative Example 3 | 240.6 | 207.6 | 86.3 | 29.4 | 95.0 | 190.3 |
| Comparative Example 4 | 240.2 | 206.2 | 85.8 | 24.8 | 95.2 | 177.2 |

Referring to Table 2, it can be confirmed that all of the batteries including the positive electrode active materials of Examples 1 to 3 have superior initial efficiency, resistance characteristics, and lifespan performance compared to the batteries including the positive electrode active materials of Comparative Examples 1 to 4.

As a result, it can be seen that when the positive electrode active material comprises a lithium composite transition metal oxide in the form of a single particle; and a coating part including cobalt formed on the lithium composite transition metal oxide in the form of a single particle, and satisfies Equation 1 or Equation 2 described herein, surface deterioration that may occur due to a high calcination temperature during the production of the positive electrode active material in the form of a single particle is reduced, and the residual lithium content is low, so that the initial efficiency, resistance characteristics, capacity characteristics, lifespan characteristics, etc. of a lithium secondary battery can be improved.

## Claims

1. A positive electrode active material comprising:
a lithium composite transition metal oxide in the form of a single particle having a layered structure; and
a coating part including cobalt formed on the lithium composite transition metal oxide, wherein the positive electrode active material satisfies Equation 1 or Equation 2 below: $0 \leq \left[-log\left({I}_{normalized , 2 θ = 37 ° ∼ 38 °}\right)-2\right] \times 100 \leq 15$ $1 < \left[-log\left({I}_{normalized , 2 θ = 45 ° ∼ 45.5 °}\right)-2\right] \times 100 \leq 10$
wherein:
I_{normalized,2θ=37°~38°} is a ratio of a peak intensity corresponding to a LiCoO₂ Cu Kα1 diffraction peak position existing at 37° to 38° to a peak intensity of a (003) plane in an XRD spectrum of the positive electrode active material, and
I_{normalized,2θ=45°~45.5°} is a ratio of a peak intensity corresponding to a LiCoO₂ Cu Kα1 diffraction peak position existing at 45° to 45.5° to the peak intensity of the (003) plane in the XRD spectrum of the positive electrode active material.

2. The positive electrode active material according to claim 1, wherein the lithium composite transition metal oxide has an average particle diameter (D₅₀) of 1.0 µm to 5.0 µm.

3. The positive electrode active material according to claim 1, wherein the lithium composite transition metal oxide includes nickel (Ni), cobalt (Co), and manganese (Mn).

4. The positive electrode active material according to claim 1, wherein the lithium composite transition metal oxide has a composition represented by Chemical Formula 1 below:
[Chemical Formula 1] LiₐNi_{b}Co_{c}Mn_{d}M¹ₑO₂
wherein:
M¹ is at least one selected from Al, Zr, B, W, Mo, Cr, Nb, Mg, Hf, Ta, La, Ti, Sr, Ba, Ce, Sn, Y, Zn, F, P, and S, and
0.9≤a≤1.1, 0.8≤b<1.0, 0<c<0.2, 0<d<0.2, 0≤e≤0.1, and b+c+d+e=1.

5. The positive electrode active material according to claim 1, wherein the coating part includes a thin film shape, a discontinuously formed island shape, or a combination thereof.

6. The positive electrode active material according to claim 1, wherein the coating part is a region ranging from a surface of the positive electrode active material to 5 nm to 100 nm in the center direction.

7. A positive electrode comprising the positive electrode active material according to any one of claims 1 to 6.

8. A lithium secondary battery comprising:
the positive electrode according to claim 7;
a negative electrode; and
a separator interposed between the positive electrode and the negative electrode; and
an electrolyte.
